# EUROPEAN PATENT SPECIFICATION

(11) **EP 2 401 804 B1**
(45) Date of publication and mention of the grant of the patent: **01.08.2018**
(21) Application number: 09779094.3
(22) Date of filing: 26.02.2009
(51) Int. Cl.: H02M 1/34

(54) **SOLID STATE DAMPING RESISTOR**
HALBLEITER-DÄMPFUNGSWIDERSTAND
RÉSISTANCE D'AMORTISSEMENT À SEMI-CONDUCTEUR

(43) Date of publication of application: 04.01.2012
(73) Proprietor: General Electric Technology GmbH, 5400 Baden (CH)
(72) Inventor: TRAINER, David, Derbyshire DE24 0AG (GB); DAVIDSON, Colin, Staffordshire ST17 OJZ (GB)
(74) Representative: Fischer, Michael Maria
(86) International application number: PCT/EP2009/052290
(87) International publication number: WO 2010/097113

(56) References cited:
- JP-A- 3 015 227
- JP-A- 2007 244 100
- PL-B1- 159 055
- SU-A1- 1 108 580
- US-A- 5 986 906
- US-A1- 2006 231 742

## Description

This invention relates to a solid state damping resistor for use in a snubber circuit in high voltage direct current (HVDC) power transmission.

In power transmission networks alternative current (AC) power is typically converted to direct current (DC) power for transmission via overhead lines and/or under-sea cables. This conversion removes the need to compensage for the AC capacitive load effects imposed by the transmission line or cable and reduces the cost per kilometre of the lines and/or cables, and thus becomes cost-effective when power needs to be transmitted over a long distance.

HVDC power converters are used to convert AC power to DC power. Thyristor switches are a key component of HVDC power converters, and act as controlled rectifiers to convert AC power to DC power and vice versa. Thyristors have very high breakdown voltages and are capable of high current loads, making them desirable for use in HVDC power converters.

Thyristors however have several limitations, which restricts their use in HVDC power converters. There is a need to limit the rate of change of current in a thyristor, especially in the first 10 µs during thyristor turn-on, to prevent local overheating before the heat has time to dissipate. Current oscillation is another problem because it can cause current reversal in the thyristor. Both situations lead to failure of the thyristor.

Another limitation of thyristors is the possibility of uncontrolled switching and partial turn-on, which can be caused by a high rate of change of voltage. During thyristor turn-on, an applied voltage across a thyristor causes a capacitance-charging current to flow through the thyristor. If the rate of change of voltage is high enough, the capacitance-charging current can exceed the gate triggering current of the thyristor, and thereby cause a premature trigger of the thyristor

In addition, during thyristor turn-off, it is desirable to ensure that a thyristor fully recovers before a positive voltage is reapplied across the thyristor i.e. before the thyristor is forward biased. A positive voltage reapplied before the end of the recovery period can cause a false trigger in the thyristor. This is undesirable because a thyristor remains latched in an on-state after it is triggered, and can only be returned to an off-state when the current drops below a thyristor holding current.

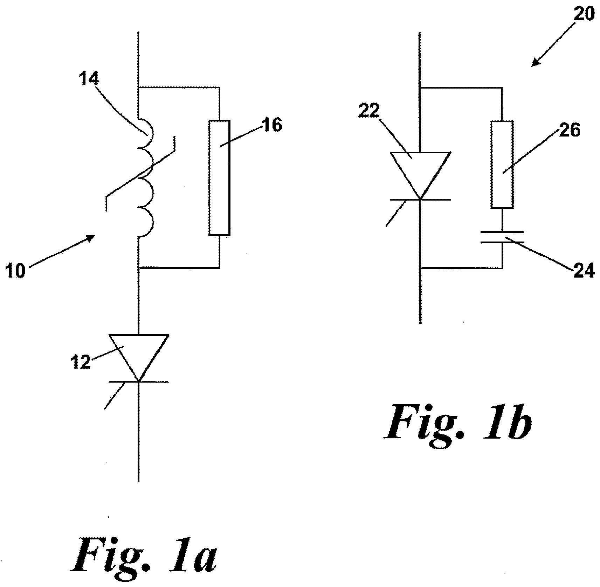

Conventionally, snubber circuits have been used in connection with a thyristor in order to overcome the limitations outlined above. One example of a conventional snubber circuit is shown in Figure 1a and includes a resistor-inductor (R-L) circuit 10, which is connected in series with a thyristor 12 to control the rate of change of current in the thyristor 12. The R-L circuit 10 includes a non-linear inductor 14, with a magnetic core, connected in parallel with a resistor 16. The inductor 14 acts to limit the rate of change of current in the thyristor 12, while the resistor 16 acts to dampen current oscillation to prevent or minimise current reversal in the thyristor 12.

Another example of a conventional snubber circuit is shown in Figure 1b and includes a resistor-capacitor (R-C) circuit 20 connected in parallel with a thyristor 22. The R-C circuit includes a capacitor 24 connected in series with a resistor 26. The resistor 26 acts to limit the current discharge from the capacitor 24 during thyristor turn-on, and, during thyristor turn-off, the limited charging current available to capacitor 24 limits the rate of change of voltage as the thyristor 22 recovers.

The high voltage requirement of HVDC power converters means that the resistors incorporated in conventional snubber circuits are typically large and dissipate relatively significant amounts of heat. Cooling equipment is normally therefore required. Electrical insulation is also however required to support the high voltage stresses of 10's of kV. This creates a design conflict between the requirement for high thermal conduction properties and excellent electrical insulation. Consequently the damping resistors used in conventional snubber circuits are not only complex and expensive, but they also occupy a significant amount of space due to their size and to accommodate the additional cooling equipment and insulation.

It is therefore desirable to provide a damping resistor that allows significant reductions in power converter cost, size and weight, is capable of controlling the rates of changes of thyristor voltage and current, and dampens current oscillations to prevent thyristor current reversal.

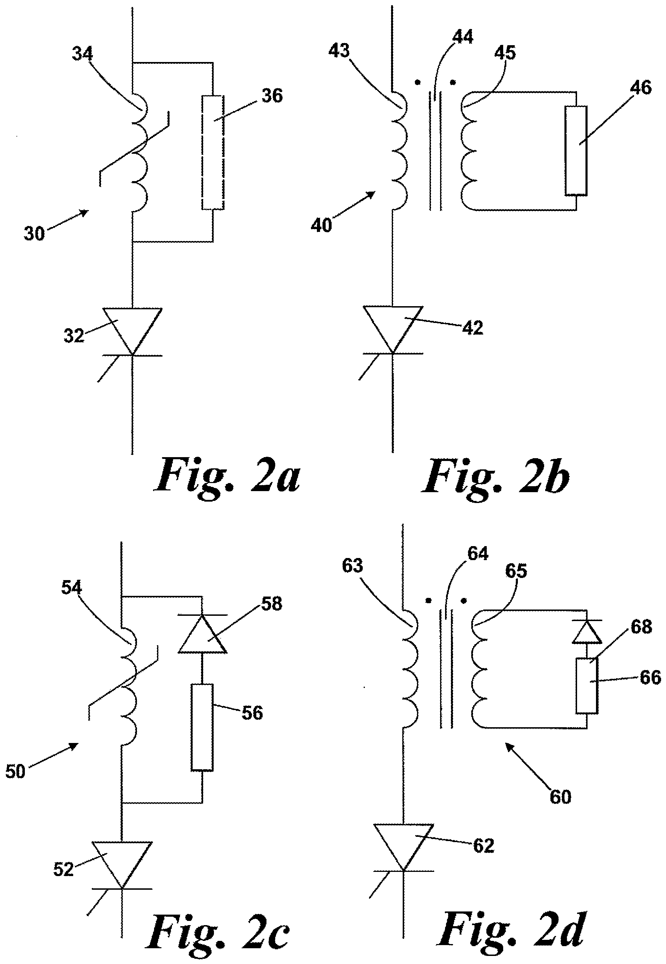

One possible solution is to replace the resistor 16 in the R-L circuit 10 of Figure 1a with a magnetic core 36, which is also used in the inductor 34 of the R-L circuit 30, to provide the required damping, as shown in Figure 2a. The use of the naturally occurring eddy-current and hysteresis of the magnetic core however requires precise control of the magnetic characteristics of the core material, and also results in considerable heat dissipation, which is difficult to remove from the magnetic core.

Another possible solution is the use of a transformer arrangement 44 to mitigate the high voltage requirement of the resistor 46, and thereby simplifies the damping resistor design as shown in Figure 2b. In such an arrangement, the first winding 43 of the transformer arrangement 44 forms an inductor while the second winding 45 of the transformer arrangement is connected in series with the resistor 46. However the inclusion of the transformer arrangement 44 has the undesirable effect of increasing complexity for the insulation design of the inductor 43.

Each of the above described solutions also suffers from the same problem, that is, during thyristor turn-on, the parallel damping resistor gives rise to a step-current in the thyristor. This step-current results in a high rate of change of current in the thyristor, that can lead to device failure.

One possible solution of the step-current problem is the inclusion of a diode 58 in series with the resistor 56, as shown in Figure 2c, wherein the resistor 56 is disconnected during the rising half-cycle of current when the thyristor 52 is forward biased. Figure 2d shows a transformer arrangement 64 wherein the first winding 63 of the transformer arrangement 64 is the inductor while the second winding 65 of the transformer arrangement is connected in series with the resistor 66 and diode 68. The inclusion of the diode 68 however adds complexity to the circuit and suffers from challenging turn-off conditions.

US 2006/0231742 concerns an apparatus for providing non-linear, passive quenching of avalanche currents in Geiger-mode avalanche photodiodes (APDs).

The patent US5986906 discloses a snubber circuit comprising a parallel connection made of an inductor and series connection of a diode and resistor, the parallel connection connected in series with a thyristor of a converter.

The present invention is defined in claims 1, 12 and 13.

In one embodiment, a junction field-effect transistor (JFET) is connected in series with an APD and the gate and source terminals of the JFET are connected together.

In response to an avalanche current generated by an input photon received by the APD, the series impedance of the JFET increases rapidly, thereby reducing the bias voltage across the APD to a level below the breakdown voltage of the APD to quench the avalanche current.

According to an aspect of the invention, there is provided a damping resistor for use in a snubber circuit comprising a semiconductor device exhibiting a non-linear resistive and current limiting function in one direction of current and voltage, and minimal impedance in the other direction of current and voltage.

The use of a semiconductor device is advantageous because such devices are small in size and weight, and have relatively low power dissipation, which minimises the need for cooling equipment. It therefore leads to significant reductions in power converter cost, size and weight.

In the context of this application, references to low impedance is intended to refer to an impedance in the range from a few Ohms down to the milli-Ohm level.

The semiconductor device is preferably a junction field effect transistor (JFET) in which a source and a gate of the junction field effect transistor are permanently connected.

Permanently connecting the source and gate of the JFET leads to the formation of a constant current diode exhibiting a non-linear resistive and current limiting function in one direction of current and voltage. This is because the device depletion layer widens to pinch off the current while, in the reverse direction of current and voltage, the device depletion layer shrinks, which has the effect of lowering impedance and improving current flow. As a result of this unidirectional characteristic, the modified JFET is a suitable replacement for the damping resistor in a snubber circuit, either on its own or in combination with other electronic components.

The connection between the source and the gate of the junction field effect transistor may be implemented by means of a low or zero impedance. In other embodiments however the connection between the source and the gate of the junction field effect transistor may be implemented by means of a controlled resistive impedance.

The use of a controlled resistive impedance allows the characteristics of the junction field effect transistor to be altered or tuned in the other direction of current and voltage.

In embodiments of the invention, the damping resistor may include a diode connected in series with the semiconductor device. In one such embodiment, including a semiconductor device in the form of a JFET, an anode of the diode is preferably connected in series with a source of the JFET.

In use, such a damping resistor is connected in parallel with an inductor to form a snubber circuit, which is connected in series with a thyristor. The series arrangement of the diode with the semiconductor device provides high impedance for positive rate of change of current when the thyristor becomes forward biased, and controlled non-linear resistive impedance for negative rate of change of current when the diode becomes forward biased. In many applications, the thyristor current is oscillatory in nature and the rate of change of current changes from positive to negative, thus reversing the voltage across the inductor. The reverse voltage acts to forward bias the diode and introduce the JFET into the system, wherein the JFET acts as a non-linear resistance to dampen the current oscillations.

In other embodiments, the damping resistor may include a resistor connected in series with the semiconductor device. In on such embodiment including a semiconductor device in the form of a JFET, the resistor is preferably connected in series with a drain of a junction field effect transistor.

In use, such a damping resistor is connected in parallel with an inductor to form a snubber circuit, which is connected in series with a thyristor. The series arrangement of the semiconductor device with the resistor provides a controlled low value of current for positive rate of change of current when the thyristor is forward biased, and a higher, resistively limited, value of current for negative rate of change of current when the thyristor is reverse biased. The advantage of this arrangement is that damping is provided in both directions of rate of change of current while limiting the thyristor step-current to an acceptable level.

In further embodiments, the damping resistor may include a second semiconductor device wherein the first semiconductor device is connected in series with the second semiconductor device. In one such embodiment, including semiconductor devices in the form of JFETs, a source of the first JFET is preferably connected in series with a source of the second JFET.

The series arrangement of the first and second semiconductor devices provides high impedance to limit current for both positive and negative rates of change of current, thereby providing damping in both directions of voltage. This arrangement is advantageous in that it eliminates the requirement for a diode and a resistor, and therefore significantly reduces design complexity while taking advantage of the desirable properties of the semiconductor devices.

In embodiments where the damping resistor includes first and second semiconductor devices, the first semiconductor device preferably has a higher current limiting value than the second semiconductor device.

The use of a first semiconductor device having a higher current limiting value than the second semiconductor device results in an asymmetric configuration in which current is limited to a lower value for positive rates of change of current than for negative rates of change of current. The advantage of this asymmetric arrangement is that damping is provided in both directions of rate of change of current while limiting the thyristor step-current to an acceptable level during a positive rate of change of current.

Preferably the or each semiconductor device is made from high temperature and high voltage material.

In the context of this application, references to high temperature material are intended to refer to materials that can comfortably operate at or above 350°C.

References to high voltage material are intended to refer to materials that can comfortably operate from several hundred volts to several 10s of thousands of volts.

In another preferred embodiment, a damping resistor as described in any of the preceding embodiments may be incorporated into a snubber circuit including an inductor connected in parallel with the damping resistor. The snubber circuit may then be connected in series with a thyristor or any other similar switch.

In such an arrangement the inductor limits the rate of change of current in the thyristor while the damping resistor dampens the resulting current oscillations to prevent current reversal in the thyristor.

In another preferred embodiment, a damping resistor as described in any of the preceding embodiments may be incorporated into a snubber circuit including a transformer arrangement, wherein a first winding of the transformer arrangement is an inductor and a second winding of the transformer arrangement is connected in series with the damping resistor.

This transformer arrangement in the snubber circuit has the advantage of reducing the high voltage requirement for the damping resistor by stepping down the voltage in the first winding to a lower value in the second winding. As a result, the voltage across the damping resistor is reduced and the need for electrical insulation of the damping resistor is minimised.

In embodiments of the invention, a snubber circuit may include a capacitor and the damping resistor, wherein the capacitor is connected in series with the damping resistor. In one such embodiment, where the damping resistor includes including a semiconductor device in the form of a JFET, the snubber circuit includes a capacitor connected in series with the drain of the JFET. The snubber circuit is then connected, in use, in parallel with a thyristor or any other semiconductor switch.

The semiconductor device provides high impedance to limit the current discharge from the capacitor during thyristor turn-on and, during thyristor turn-off, the semiconductor device provides a low impedance path for the connection of the capacitor, which provides control of the rate of change of voltage as the thyristor recovers.

The high power and high voltage requirement of HVDC power converters makes it desirable to construct its components from material that can withstand high temperatures and high voltage stresses. Semiconductor materials such as silicon carbide may therefore be used to increase the rating of the semiconductor devices into the kV and 10's to 100's Ampere region.

Preferred embodiments of the invention will now be described, by way of non-limiting examples, with reference to the accompanying drawings in which:
Figures 1a and 1b show, in schematic, prior art snubber circuits for use in HVDC power converters with the ability to control the rate of change of current and the rate of change of voltage in a thyristor;
Figures 2a, 2b, 2c and 2d show, in schematic, prior art snubber circuits with various configurations for the damping resistor;
Figure 3a shows a damping resistor according to a first embodiment of the invention;
Figure 3b shows the current limiting characteristics of a constant current diode;
Figure 4a shows a damping resistor and a snubber circuit according to a second embodiment of the invention;
Figure 4b shows a damping resistor and a snubber circuit according to a third embodiment of the invention;
Figure 4c shows a damping resistor and a snubber circuit according to a fourth embodiment of the invention;
Figure 4d shows a snubber circuit according to a fifth embodiment of the invention;
Figure 4e shows a snubber circuit according to a sixth embodiment of the invention;
Figure 4f shows a snubber circuit according to a seventh embodiment of the invention; and
Figure 5 shows a snubber circuit according to an eighth embodiment of the invention.

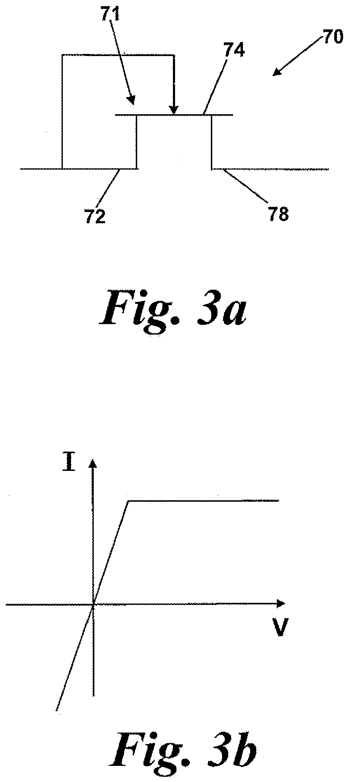

A damping resistor 70 according to a first embodiment of the invention is shown in Figure 3a.

The damping resistor 70 includes a semiconductor device exhibiting the behaviour shown in Figure 3b, which is a non-linear resistive and current limiting function in one direction of current and voltage, and low impedance in the opposite direction of current and voltage.

The damping resistor 70 includes a junction field effect transistor (JFET) 71 in which the source 72 and the gate 74 of the JFET are permanently connected.

In one direction of current and voltage the JFET 71 exhibits a non-linear resistive and current limiting function as the device depletion layer widens to pinch off the current.

In the reverse direction of current and voltage the source 72 and the gate 74 of the JFET are permanently connected by means of a low or otherwise zero impedance such that device depletion layer shrinks and thereby lowers the impedance of the device and improves current flow.

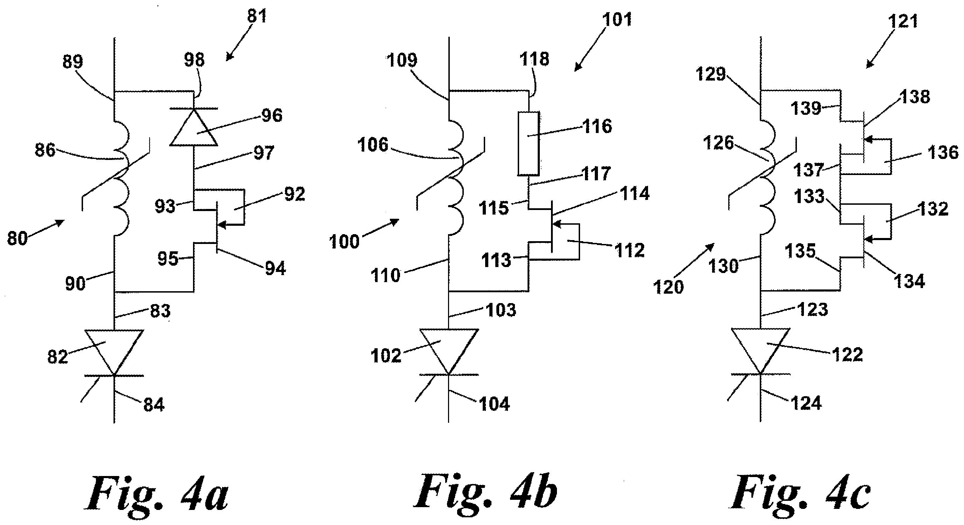

A damping resistor 81 according to a second embodiment of the invention is shown in Figure 4a.

As in the first embodiment shown in Figure 3a, the damping resistor 81 includes a JFET 92 in which the source 93 and the gate 94 of the JFET 92 are permanently connected.

The damping resistor 81 also includes a diode 96 connected in series with the JFET 92, the anode 97 of the diode 96 connected in series with the source 93 of the JFET 92.

In use, the damping resistor 81 may be connected in parallel with an inductor 86 to form a snubber circuit 80, as shown in Figure 4a. In the snubber circuit 80, the cathode 98 of the diode 96 is connected to a first end 89 of the inductor 86 and the drain 95 of the JFET 92 is connected to the second, opposite end 90 of the inductor 86. The second end 90 of the inductor 86 is then connected in series with the anode 83 of a thyristor 82.

In this arrangement, the inductor 86 acts to limit the rate of change of current in the thyristor 82, while the damping resistor 81 acts to dampen the resulting current oscillations to prevent current reversal in the thyristor 82.

In particular, the damping resistor 81 provides high impedance when the thyristor 82 is forward biased and triggered. When the diode 96 is forward biased, the damping resistor 81 is introduced into the circuit 80 and acts as a non-linear resistance to dampen current oscillations.

A damping resistor 101 according to a third embodiment of the invention is shown in Figure 4b.

As in the first and second embodiments shown in Figures 3a and 4a, the damping resistor 101 includes a JFET 112 in which the source 113 and the gate 114 of the JFET 112 are permanently connected.

The damping resistor 101 also includes a resistor 116 connected in series with the JFET 112, the resistor 116 being connected in series with the drain 115 of the JFET 112.

In use, the damping resistor 101 may connected in parallel with an inductor 106 to form a snubber circuit 100, as shown in Figure 4b. In the snubber circuit 100, a second end 118 of the resistor 116 is connected to a first end 109 of the inductor 106 and the source 113 of the JFET 112 is connected to a second, opposite end 110 of the inductor 106. The second end 110 of the inductor 106 is then connected in series with the anode 103 of a thyristor 102.

In this arrangement, the inductor 106 acts to limit the rate of change of current in the thyristor 102, while the damping resistor 101 acts to dampen the resulting current oscillations to prevent current reversal in the thyristor 102.

In particular, the resistor 116 of the damping resistor 101 provides a controlled low value of current when the thyristor 102 is forward biased and a resistively limited value of current when the thyristor 102 is reverse biased. The presence of the damping resistor 101 minimises any resulting step-current in the thyristor 102.

A damping resistor 121 according to a fourth embodiment of the invention is shown in Figure 4c.

As in the first, second and third embodiments shown in Figures 3a, 4a and 4b, the damping resistor 121 includes a first JFET 132 in which the source 133 and the gate 134 of the first JFET 132 are permanently connected.

The damping resistor 121 also includes a second JFET 136 in which the source 137 and the gate 138 are permanently connected. The second JFET 136 is connected in series with the first JFET 132, the source 137 of the second JFET 136 being connected in series with the source 133 of the first JFET 132 of the damping resistor 121.

In use, the damping resistor 121 in connected in parallel with an inductor 126 to form a snubber circuit 120, as shown in Figure 4c. In the snubber circuit 120, the drain 139 of the second JFET 136 is connected to a first end 129 of the inductor 126 and the drain 135 of the first JFET 132 is connected to a second, opposite end 130 of the inductor 126. The second end 130 of the inductor 126 is then connected in series with the anode 123 of a thyristor 122.

In this arrangement, the inductor 126 acts to limit the rate of change of current in the thyristor 122, while the damping resistor 121 acts to dampen the resulting current oscillations to prevent current reversal in the thyristor 122.

In particular, the second JFET 136 of the damping resistor 121 provides damping when the thyristor 122 is forward biased, and the first JFET 132 provides damping when the thyristor 122 is reverse biased.

The first JFET 132 preferably has a higher current limiting value than the second JFET 136, resulting in an asymmetric configuration.

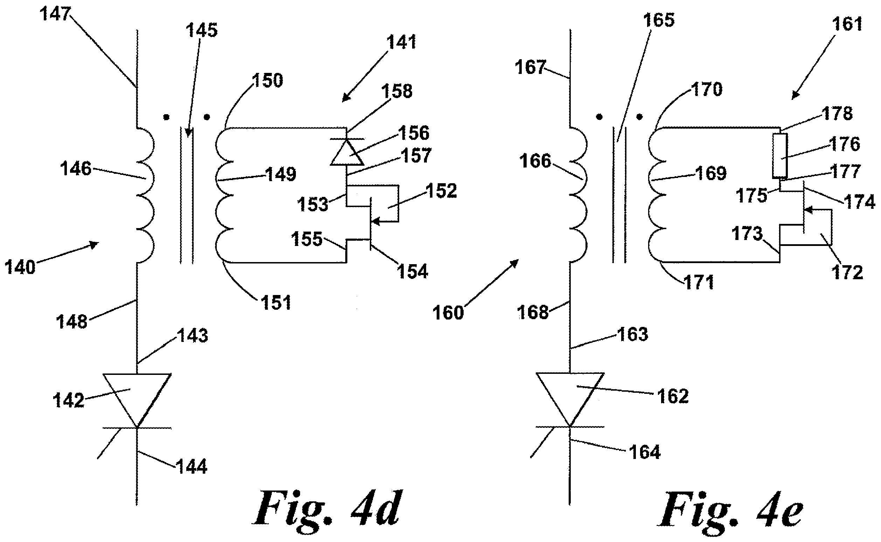

A snubber circuit 140 according to a fifth embodiment of the invention is shown in Figure 4d, and includes a transformer arrangement 145 and a damping resistor 141, the damping resistor 141 including a diode 156 and a JFET 152 and having a structure that is essentially the same as the damping resistor 81 shown in Figure 4a and is not therefore described again in detail.

The transformer arrangement 145 includes first and second windings 146,149, the first winding 146 provided to act as an inductor and the second winding 149 connected in series with the damping resistor 141.

A first end 150 of second winding 149 is connected in series with the cathode 158 of the diode 156 while the second, opposite end 151 of the second winding 149 is connected in series with the drain 155 of the JFET 152.

A second end 148 of the first winding 146 is connected in series with the anode 143 of a thyristor 142.

In this arrangement, the voltage across the first winding 146 is stepped down to a lower value in the second winding 149 when the thyristor 142 is biased in either direction.

A snubber circuit 160 according to a sixth embodiment of the invention is shown in Figure 4e, and includes a transformer arrangement 165 and a damping resistor 161, the damping resistor 161 including a resistor 176 and a JFET 172 and having a structure that is essentially the same as the damping resistor 101 shown in Figure 4b and is not therefore described again in detail.

The transformer arrangement 165 includes first and second windings 166,169, the first winding 166 provided to act as an inductor and the second winding 169 connected in series with the damping resistor 161.

A first end 170 of the second winding 169 is connected in series with a second end 178 of the resistor 176 while the second, opposite end 171 of the second winding 169 is connected in series with the source 173 of the JFET 172.

A second end 168 of the first winding 166 is connected in series with the anode 163 of the thyristor 162.

In this arrangement, the voltage across the first winding 166 is stepped down to a lower value in the second winding 169 when the thyristor is biased in either direction.

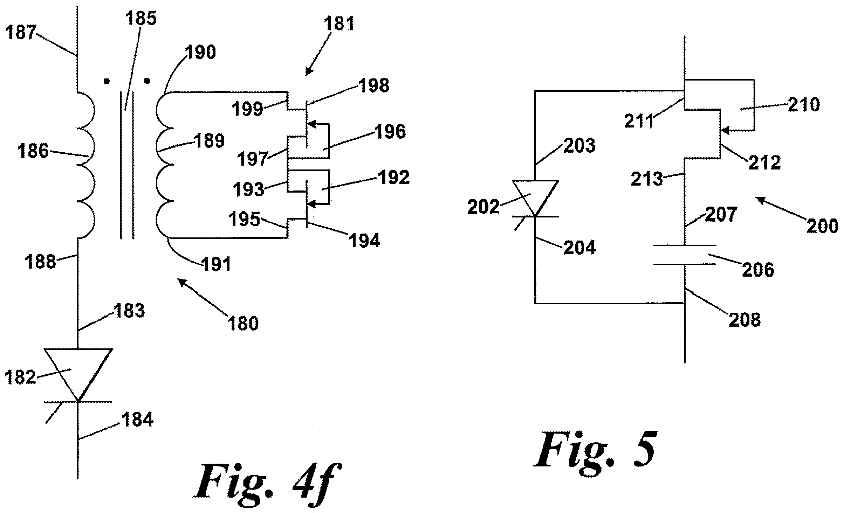

A snubber circuit 180 according to a seventh embodiment of the invention is shown in Figure 4f, and includes a transformer arrangement 185 and a damping resistor 181, the damping resistor 181 including first and second JFETs 192,196 and having a structure that is essentially the same as the damping resistor 121 shown in Figure 4c and is not therefore described again in detail.

The transformer arrangement 185 includes first and second windings 186,189, the first winding 186 provided to act as an inductor and the second winding 189 connected in series with the damping resistor 181.

A first end 190 of the second winding 189 is connected in series with the drain 199 of the second JFET 196 while the second, opposite end 191 of the second winding 189 is connected in series with the drain 195 of the first JFET 192.

A second end 188 of the first winding 186 is connected in series with the anode 183 of the thyristor 182.

In this arrangement, the voltage across the first winding 186 is stepped down to a lower value in the second winding 189 when the thyristor 182 is biased in either direction.

A snubber circuit according to an eighth embodiment of the invention is shown in Figure 5 and includes a capacitor 206 and a damping resistor in the form of a JFET 210 in which the source 211 and the gate 212 of the JFET 210 are permanently connected.

A first end 207 of the capacitor 206 is connected in series with the drain 213 of the JFET 210 and, in use, the snubber circuit 200 is connected in parallel with a thyristor 202 such that the source 211 of the JFET 210 is connected to the anode 203 of the thyristor 202 and the second end 208 of the capacitor 206 is connected to the cathode 204 of the thyristor 202.

In this arrangement, the JFET 210 of the damping resistor provides high impedance to limit the current discharge from the capacitor 206 when the thyristor 202 is forward biased.

The JFET 210 of the damping resistor provides a low impedance path for the connection of the capacitor 206, which provides control of the rate of change of voltage in the thyristor 202 during its recovery period when the thyristor 202 is forward biased.

In each of the embodiments shown in Figures 3a, 3b, 4a-4f and 5, the source and the gate of the JFET are permanently connected by means of a low or zero impedance. In other embodiments the source and the gate of each of the JFETs may be permanently connected by means of a controlled resistive impedance, which can be used to alter or otherwise tune the characteristics of the JFET.

## Claims

1. Use of a damping resistor (70, 81, 101, 121, 141, 161, 181) in a snubber circuit, the said damping resistor comprising a junction field effect transistor (71, 92, 112, 132, 152, 172, 192, 210) with a source (72, 93, 113, 133, 211) and a gate (74, 94, 114, 134, 212) permanently connected exhibiting a non-linear resistive and current limiting function in one direction of current and voltage, and minimal impedance in the other direction of current and voltage.

2. Use of a damping resistor according to Claim 1 wherein the connection between the source and the gate of the junction field effect transistor is implemented by means of a low impedance.

3. Use of a damping resistor according to Claim 1 wherein the connection between the source and the gate of the junction field effect transistor is implemented by means of a controlled resistive impedance.

4. Use of a damping resistor according to any preceding claim including a diode (96) connected in series with the junction field effect transistor (92).

5. Use of a damping resistor according to any of Claims 1 to 3 and Claim 4, wherein an anode of the diode (96) is connected in series with the source of the junction field effect transistor (92).

6. Use of a damping resistor according to any of Claims 1 to 3 including a resistor (116) connected in series with the junction field effect transistor (112).

7. Use of a damping resistor according to any of Claims 1 to 3 and Claim 6, wherein the resistor (116) is connected in series with a drain of the junction field effect transistor (112).

8. Use of a damping resistor according to any of Claims 1 to 3 including a semiconductor device (136) wherein the junction field effect transistor (132) is connected in series with the semiconductor device.

9. Use of a damping resistor according to any of Claims 1 to 3 and Claim 8, wherein the semiconductor device (136) is a second junction field effect transistor and the source (133) of the first junction field effect transistor (132) is connected in series with a source (137) of the second junction field effect transistor (136).

10. Use of a damping resistor according to Claim 8 or Claim 9 wherein the first junction field effect transistor (132) has a higher current limiting value than the semiconductor device (136).

11. Use of a damping resistor according to any of the preceding claims wherein the or each junction field effect transistor is made from high temperature and high voltage material.

12. A snubber circuit comprising an inductor (86, 106, 126) and a damping resistor (81, 101, 121), the said damping resistor comprising a junction field effect transistor (92, 112, 132) with a source (93, 113, 133) and a gate (94, 114, 134) permanently connected exhibiting a non-linear resistive and current limiting function in one direction of current and voltage, and minimal impedance in the other direction of current and voltage, wherein the inductor is connected in parallel with the damping resistor.

13. A snubber circuit comprising a transformer arrangement (145, 165, 185) and a damping resistor (141, 161, 181), the said damping resistor comprising a junction field effect transistor (152, 172, 192) with a source (153, 173, 193) and a gate (154, 174, 194) permanently connected exhibiting a non-linear resistive and current limiting function in one direction of current and voltage, and minimal impedance in the other direction of current and voltage wherein a first winding (146, 166, 186) of the transformer arrangement is an inductor and a second winding (149, 169, 189) of the transformer arrangement is connected in series with the damping resistor (141, 161, 181).

14. A snubber circuit comprising a capacitor (206) and a damping resistor, the said damping resistor comprising a junction field effect transistor (210) with a source (211) and a gate (212) permanently connected exhibiting a non-linear resistive and current limiting function in one direction of current and voltage, and minimal impedance in the other direction of current and voltage, wherein the capacitor (206) is connected in series with the damping resistor.

15. A snubber circuit comprising a capacitor (206) and a damping resistor, the said damping resistor comprising a junction field effect transistor (210) with a source (211) and a gate (212) permanently connected exhibiting a non-linear resistive and current limiting function in one direction of current and voltage, and minimal impedance in the other direction of current and voltage, wherein the capacitor (206) is connected in series with the drain (213) of the junction field effect transistor (210).

16. A snubber circuit according to any of Claims 12 to 15, wherein the or each junction field effect transistor is made from high temperature and high voltage material.

## Patentansprüche

1. Verwendung eines Dämpfungswiderstands (70, 81, 101, 121, 141, 161, 181) in einer Snubber-Schaltung, wobei der Dämpfungswiderstand einen Sperrschicht-Feldeffekttransistor (71, 92, 112, 132, 152, 172, 192, 210) mit einer Quelle (72, 93, 113, 133, 211) und einem Gate (74, 94, 114, 134, 212) umfasst, die festgeschaltet sind, die eine nicht lineare resistive und strombegrenzende Funktion in eine Richtung von Strom und Spannung, und minimale Impedanz in die andere Richtung von Strom und Spannung aufweisen.

2. Verwendung eines Dämpfungswiderstands nach Anspruch 1, wobei der Anschluss zwischen der Quelle und dem Gate des Sperrschicht-Feldeffekttransistors mittels einer niedrigen Impedanz umgesetzt wird.

3. Verwendung eines Dämpfungswiderstands nach Anspruch 1, wobei der Anschluss zwischen der Quelle und dem Gate des Sperrschicht-Feldeffekttransistors mittels einer gesteuerten resistiven Impedanz umgesetzt wird.

4. Verwendung eines Dämpfungswiderstands nach einem der vorstehenden Ansprüche, einschließlich einer Diode (96), die mit dem Sperrschicht-Feldeffekttransistor (92) in Reihe geschaltet ist.

5. Verwendung eines Dämpfungswiderstands nach einem der Ansprüche 1 bis 3 und nach Anspruch 4, wobei eine Anode der Diode (96) mit der Quelle des Sperrschicht-Feldeffekttransistors (92) in Reihe geschaltet ist.

6. Verwendung eines Dämpfungswiderstands nach einem der Ansprüche 1 bis 3, einschließlich eines Widerstands (116), der mit dem Sperrschicht-Feldeffekttransistor (112) in Reihe geschaltet ist.

7. Verwendung eines Dämpfungswiderstands nach einem der Ansprüche 1 bis 3 und nach Anspruch 6, wobei der Widerstand (116) mit einem Drain des Sperrschicht-Feldeffekttransistors (112) in Reihe geschaltet ist.

8. Verwendung eines Dämpfungswiderstands nach einem der Ansprüche 1 bis 3, einschließlich einer Halbleitervorrichtung (136) wobei der Sperrschicht-Feldeffekttransistor (132) mit der Halbleitervorrichtung in Reihe geschaltet ist.

9. Verwendung eines Dämpfungswiderstands nach einem der Ansprüche 1 bis 3 und nach Anspruch 8, wobei die Halbleitervorrichtung (136) ein zweiter Sperrschicht-Feldeffekttransistor ist, und die Quelle (133) des ersten Sperrschicht-Feldeffekttransistors (132) mit einer Quelle (137) des zweiten Sperrschicht-Feldeffekttransistors (136) in Reihe geschaltet ist.

10. Verwendung eines Dämpfungswiderstands nach Anspruch 8 oder Anspruch 9, wobei der erste Sperrschicht-Feldeffekttransistor (132) einen höheren Strombegrenzungswert als die Halbbleitervorrichtung (136) hat.

11. Verwendung eines Dämpfungswiderstands nach einem der vorstehenden Ansprüche, wobei der oder jeder Sperrschicht-Feldeffekttransistor Hochtemperatur- und Hochspannungsmaterial hergestellt ist.

12. Snubber-Schaltung umfassend einen Induktor (86, 106, 126) und einen Dämpfungswiderstand (81, 101, 121), wobei der Dämpfungswiderstand einen Sperrschicht-Feldeffekttransistor (92, 112, 132) mit einer Quelle (93, 113, 133) und einem Gate (94, 114, 134) umfasst, die festgeschaltet sind, die eine nicht lineare resistive und strombegrenzende Funktion in eine Richtung von Strom und Spannung, und minimale Impedanz in die andere Richtung von Strom und Spannung aufweisen, wobei der Induktor mit dem Dämpfungswiderstand parallel geschaltet ist.

13. Snubber-Schaltung umfassend eine Transformatoranordnung (145, 165, 185) und einen Dämpfungswiderstand (141, 161, 181), wobei der Dämpfungswiderstand einen Sperrschicht-Feldeffekttransistor (152, 172, 192) mit einer Quelle (153, 173, 193) und einem Gate (154, 174, 194) umfasst, die festgeschaltet sind, die eine nicht lineare resistive und strombegrenzende Funktion in eine Richtung von Strom und Spannung, und minimale Impedanz in die andere Richtung von Strom und Spannung aufweisen, wobei eine erste Wicklung (146, 166, 186) der Transformatoranordnung ein Induktor ist und eine zweite Wicklung (149, 169, 189) der Transformatoranordnung mit dem Dämpfungswiderstand (141, 161, 181) in Reihe geschaltet ist.

14. Snubber-Schaltung umfassend einen Kondensator (206) und einen Dämpfungswiderstand, wobei der Dämpfungswiderstand einen Sperrschicht-Feldeffekttransistor (210) mit einer Quelle (211) und einem Gate (212) umfasst, die festgeschaltet sind, die eine nicht lineare resistive und strombegrenzende Funktion in eine Richtung von Strom und Spannung, und minimale Impedanz in die andere Richtung von Strom und Spannung aufweisen, wobei der Kondensator (206) mit dem Dämpfungswiderstand in Reihe geschaltet ist.

15. Snubber-Schaltung umfassend einen Kondensator (206) und einen Dämpfungswiderstand, wobei der Dämpfungswiderstand einen Sperrschicht-Feldeffekttransistor (210) mit einer Quelle (211) und einem Gate (212) umfasst, die festgeschaltet sind, die eine nicht lineare resistive und strombegrenzende Funktion in eine Richtung von Strom und Spannung, und minimale Impedanz in die andere Richtung von Strom und Spannung aufweisen, wobei der Kondensator (206) mit dem Drain (213) des Sperrschicht-Feldeffekttransistors (210) in Reihe geschaltet ist.

16. Snubber-Schaltung nach einem der Ansprüche 12 bis 15, wobei der oder jeder Sperrschicht-Feldeffekttransistor aus einem Hochtemperatur- und Hochspannungsmaterial hergestellt ist.

## Revendications

1. Utilisation d'une résistance d'amortissement (70, 81, 101, 121, 141, 161, 181) dans un circuit d'amortissement, ladite résistance d'amortissement comprenant un transistor à effet de champ à jonction (71, 92, 112, 132, 152, 172, 192, 210) avec une source (72, 93, 113, 133, 211) et une grille (74, 94, 114, 134, 212) connectées en permanence présentant une fonction de limitation de courant et de résistance non linéaire dans un sens du courant et de la tension, et une impédance minimale dans l'autre sens du courant et de la tension.

2. Utilisation d'une résistance d'amortissement selon la revendication 1, dans laquelle la connexion entre la source et la grille du transistor à effet de champ à jonction est mise en oeuvre au moyen d'une faible impédance.

3. Utilisation d'une résistance d'amortissement selon la revendication 1, dans laquelle la connexion entre la source et la grille du transistor à effet de champ à jonction est mise en oeuvre au moyen d'une impédance résistive contrôlée.

4. Utilisation d'une résistance d'amortissement selon l'une quelconque des revendications précédentes, comprenant une diode (96) connectée en série avec le transistor à effet de champ à jonction (92).

5. Utilisation d'une résistance d'amortissement selon l'une quelconque des revendications 1 à 3 et la revendication 4, dans laquelle une anode de la diode (96) est connectée en série avec la source du transistor à effet de champ à jonction (92).

6. Utilisation d'une résistance d'amortissement selon l'une quelconque des revendications 1 à 3 comprenant une résistance (116) connectée en série avec le transistor à effet de champ à jonction (112).

7. Utilisation d'une résistance d'amortissement selon l'une quelconque des revendications 1 à 3 et la revendication 6, dans laquelle la résistance (116) est connectée en série avec un drain du transistor à effet de champ à jonction (112).

8. Utilisation d'une résistance d'amortissement selon l'une quelconque des revendications 1 à 3 comprenant un dispositif à semi-conducteur (136) dans lequel le transistor à effet de champ à jonction (132) est connecté en série au dispositif à semi-conducteur.

9. Utilisation d'une résistance d'amortissement selon l'une quelconque des revendications 1 à 3 et la revendication 8, dans laquelle le dispositif à semi-conducteur (136) est un second transistor à effet de champ à jonction et la source (133) du premier transistor à effet de champ à jonction (132) est connectée en série avec une source (137) du second transistor à effet de champ à jonction (136).

10. Utilisation d'une résistance d'amortissement selon la revendication 8 ou la revendication 9, dans laquelle le premier transistor à effet de champ à jonction (132) a une valeur de limitation de courant plus élevée que le dispositif à semi-conducteur (136).

11. Utilisation d'une résistance d'amortissement selon l'une quelconque des revendications précédentes, dans laquelle le ou chaque transistor à effet de champ à jonction est constitué de matériau résistant aux hautes températures et à la haute tension.

12. Circuit d'amortissement comprenant une bobine d'induction (86, 106, 126) et une résistance d'amortissement (81, 101, 121), ladite résistance d'amortissement comprenant un transistor à effet de champ à jonction (92, 112, 132) avec une source (93, 113, 133) et une grille (94, 114, 134) connectées en permanence présentant une fonction de limitation de courant et de résistance non linéaire dans un sens du courant et de la tension, et une impédance minimale dans l'autre sens du courant et de la tension, dans lequel la bobine d'induction est connectée en parallèle avec la résistance d'amortissement.

13. Circuit d'amortissement comprenant un agencement de transformateur (145, 165, 185) et une résistance d'amortissement (141, 161, 181), ladite résistance d'amortissement comprenant un transistor à effet de champ à jonction (152, 172, 192) avec une source (153, 173, 193) et une grille (154, 174, 194) connectées en permanence présentant une fonction de limitation de courant et de résistance non linéaire dans un sens du courant et de la tension, et une impédance minimale dans l'autre sens du courant et de la tension, dans lequel un premier enroulement (146, 166, 186) de l'agencement de transformateur est une bobine d'induction et un second enroulement (149, 169, 189) de l'agencement de transformateur est connecté en série avec la résistance d'amortissement (141, 161, 181).

14. Circuit d'amortissement comprenant un condensateur (206) et une résistance d'amortissement, ladite résistance d'amortissement comprenant un transistor à effet de champ à jonction (210) avec une source (211) et une grille (212) connectées en permanence présentant une fonction de limitation de courant et de résistance non linéaire dans un sens du courant et de la tension, et une impédance minimale dans l'autre sens du courant et de la tension, dans lequel le condensateur (206) est connecté en série avec la résistance d'amortissement.

15. Circuit d'amortissement comprenant un condensateur (206) et une résistance d'amortissement, ladite résistance d'amortissement comprenant un transistor à effet de champ à jonction (210) avec une source (211) et une grille (212) connectées en permanence présentant une fonction de limitation de courant et de résistance non linéaire dans un sens du courant et de la tension, et une impédance minimale dans l'autre sens du courant et de la tension, dans lequel le condensateur (206) est connecté en série avec le drain (213) du transistor à effet de champ à jonction (210).

16. Circuit d'amortissement selon l'une quelconque des revendications 12 à 15, dans lequel le ou chaque transistor à effet de champ à jonction est constitué de matériau résistant aux hautes températures et à la haute tension.
